# EUROPEAN PATENT APPLICATION

(11) **EP 4 749 165 A1**
(43) Date of publication of application: **27.05.2026**
(21) Application number: 24845424.1
(22) Date of filing: 11.07.2024
(51) Int. Cl.: F16J 15/10

(54) **SEALING STRUCTURE AND METHOD FOR MANUFACTURING SEALING STRUCTURE**

(30) Priority: 21.07.2023 JP 2023118816
(71) Applicant: NOK Corporation, Minato-ku Tokyo 105-8585 (JP)
(72) Inventor: TANJI, Isao, Nihonmatsu-shi, Fukushima 964-0811 (JP); IWASAKA, Takayoshi, Makinohara-shi, Shizuoka 421-0532 (JP)
(74) Representative: Global IP Europe Patentanwaltskanzlei
(86) International application number: PCT/JP2024/025094
(87) International publication number: WO 2025/023043

(57) **Abstract**

A sealing structure includes a first member provided with a mounting hole, a second member facing the first member, a fastener inserted in the mounting hole and fastening the first member and the second member together, and a gasket including a plurality of components disposed between the first member and the second member, wherein the plurality of components includes a first component including a first end surface and a second component including a second end surface facing the first end surface, and wherein the fastener is disposed between the first end surface and the second end surface.

## Description

### TECHNICAL FIELD

This disclosure relates to sealing structures and to methods for producing the sealing structures.

### BACKGROUND ART

There has been conventionally proposed a gasket provided between a pair of structures that face each other. For example, Patent Document 1 discloses a gasket having a structure in which a gap between a plurality of divided sections is sealed with a liquid gasket.

### Related Art Document

### Patent Document

Patent Document 1: Japanese Patent Application, Laid-Open Publication No. 2020-76467

### SUMMARY OF THE INVENTION

### Problem to be Solved by the Invention

However, in the prior art, the plurality of divided sections are bonded together by an adhesive or by a liquid gasket. Thus, a step of applying an adhesive or a liquid gasket is necessary, and there is a problem in that a step of assembling a gasket is complicated. In view of the circumstances described above, an object of an aspect of this disclosure is to construct a sealing structure by a simple operation.

### Means for Solving Problem

A sealing structure according to an aspect of this disclosure includes a first member provided with a mounting hole, a second member facing the first member, a fastener inserted in the mounting hole and fastening the first member and the second member together, and a gasket including a plurality of components disposed between the first member and the second member, wherein the plurality of components includes a first component including a first end surface and a second component including a second end surface facing the first end surface, and wherein the fastener is disposed between the first end surface and the second end surface.

A method for producing a sealing structure according to an aspect of this disclosure includes a step of disposing, between a first member provided with a mounting hole and a second member facing the first member, a plurality of components constituting a gasket, the step being a step of disposing the plurality of components such that a first end surface of a first component among the plurality of components and a second end surface of a second component among the plurality of components face each other, and a step of fastening the first member and the second member together by inserting a fastener into the mounting hole such that the fastener is disposed between the first end surface and the second end surface.

### BRIEF DESCRIPTION OF THE DRAWINGS

Fig. 1 is a side view of a sealing structure according to a first embodiment.
Fig. 2 is a plan view of a gasket.
Fig. 3 is a cross section of a component.
Fig. 4 is an explanatory diagram showing a punching process according to a comparative example.
Fig. 5 is an explanatory diagram showing a punching process according to the first embodiment.
Fig. 6 is an enlarged plan view of a vicinity of a fastener.
Fig. 7 comprises plan views of a first component and a second component.
Fig. 8 is an enlarged plan view of a vicinity of the fastener according to a second embodiment.
Fig. 9 comprises plan views of the first component and the second component according to the second embodiment.
Fig. 10 is a side view of the fastener according to the second embodiment.
Fig. 11 is a side view of the fastener according to a modification.

### MODES FOR CARRYING OUT THE INVENTION

### A: First Embodiment

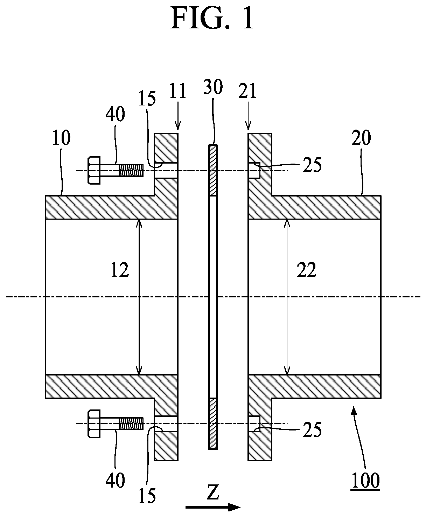

Fig. 1 is a cross section of a sealing structure 100 according to a first embodiment of this disclosure. As shown in Fig. 1, the sealing structure 100 according to the first embodiment includes a first member 10, a second member 20, a gasket 30, and a plurality of fasteners 40. For convenience, Fig. 1 shows a state in which the first member 10 and the second member 20 are separated from each other.

The first member 10 and the second member 20 face each other. The first member 10 is a hollow member that includes a joining surface 11 provided with an opening 12. Similarly, the second member 20 is a hollow member that includes a joining surface 21 provided with an opening 22. The first member 10 and the second member 20 are fastened together by the plurality of fasteners 40 in a state in which the joining surface 11 and the joining surface 21 face each other. The opening 12 of the first member 10 and the opening 22 of the second member 20 are in communication with each other to form an internal space of the sealing structure 100.

Each of the plurality of fasteners 40 is a bolt fastening the first member 10 and the second member 20 together. The plurality of fasteners 40 are spaced apart from one another around the opening 12 and the opening 22.

The gasket 30 is a loop-shaped sealing member provided between the first member 10 and the second member 20. Specifically, the gasket 30 is sandwiched between the joining surface 11 of the first member 10 and the joining surface 21 of the second member 20. The gasket 30 surrounds the internal space of the sealing structure 100.

It should be noted that in the following description, a Z-axis is assumed. The Z axis is an axis along a direction of thickness of the gasket 30. In other words, the gasket 30 is provided along a plane perpendicular to the Z-axis. Furthermore, in the following description, a view of each element of the sealing structure 100 in a line of sight along the Z-axis is referred to as a "plan view".

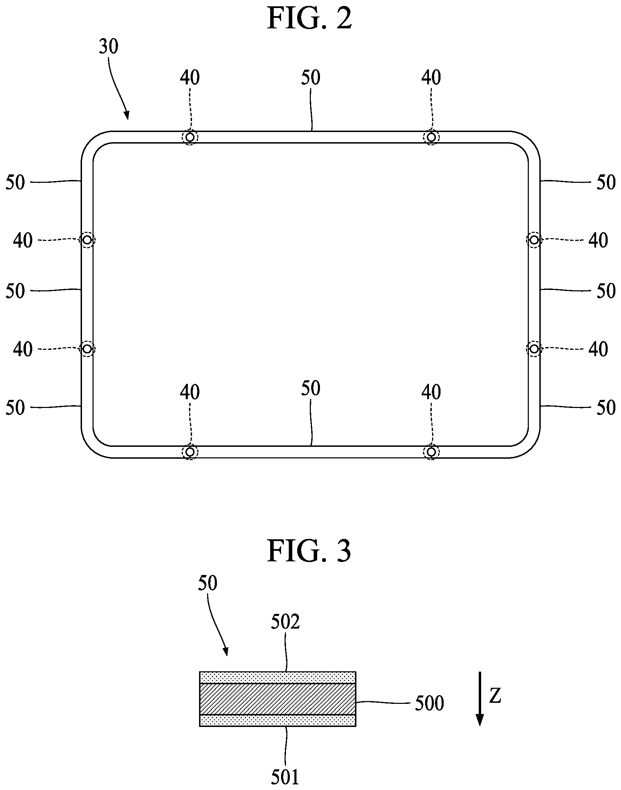

Fig. 2 is a plan view of the gasket 30. It should be noted that in Fig. 2, furthermore, an outer shape of each of the plurality of fasteners 40 is shown in dashed line. As shown in Fig. 2, a general shape of the gasket 30 according to the first embodiment is a shape of a rectangular loop (in other words, a shape of a rectangular frame). Specifically, the gasket 30 includes a plurality of components 50. The plurality of components 50 is disposed between the first member 10 (joining surface 11) and the second member 20 (joining surface 21).

Each of the plurality of components 50 is an elongated part that has a shape of a straight line, a shape of a folded line, or a shape of a curved line. The gasket 30 is constituted of the respective components 50 arranged in the shape of a loop. A fastener 40 is disposed between two adjacent components 50.

Fig. 3 is a cross section of each of the plurality of components 50. As shown in Fig. 3, each of the plurality of components 50 includes a base 500, a first elastic layer 501, and a second elastic layer 502. The base 500 is a plate-shaped rigid member, and is made of metal material, for example. Specifically, the base 500 is made of a stainless steel sheet, a cold-rolled steel sheet, a galvanized steel sheet, or an aluminum alloy sheet, for example.

The first elastic layer 501 and the second elastic layer 502 are elastic films, which are made of elastic material and cover the base 500. The first elastic layer 501 covers one surface of the base 500. The second elastic layer 502 covers the other surface of the base 500. In other words, each of the plurality of components 50 is a laminate in which the base 500 is interposed between the first elastic layer 501 and the second elastic layer 502. It should be noted that the surfaces of the base 500 may be subjected to a surface treatment for securing adhesion to the first elastic layer 501 and to the second elastic layer 502.

The first elastic layer 501 and the second elastic layer 502 are made of synthetic rubber sheets (for example, foamed rubber) containing one or more rubber compounds selected from among nitrile rubber, styrene-butadiene rubber, fluorine rubber, acrylic rubber, and silicone rubber, for example.

Each of the plurality of components 50 described above is produced by a process (punching process) of partially punching a plate-shaped member (hereinafter referred to as a "base member"), which is a material, by pressing, for example. The base member is a laminated base plate having both surfaces made of metal sheets covered with elastic films.

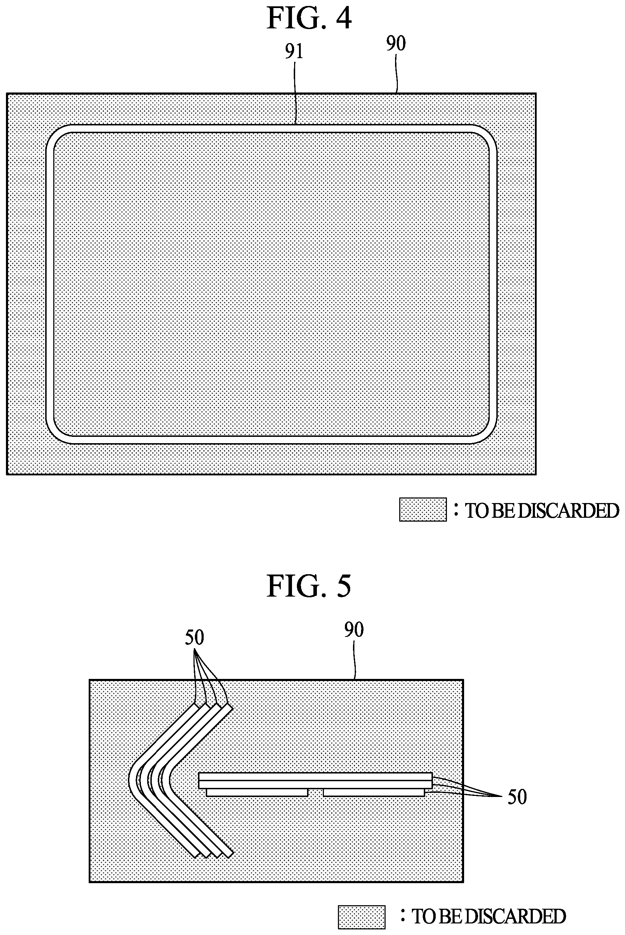

Fig. 4 is an explanatory diagram showing a punching process according to a configuration (hereinafter referred to as a "comparative example") in which a gasket 91, which has an outer shape similar to that of the gasket 30 according to the first embodiment, is constituted of a single member. As shown in Fig. 4, in the comparative example, a portion of a base member 90 located outside the gasket 91 and a portion of the base member 90 located inside the gasket 91 are discarded. As described above, in the comparative example, the base member 90 is required to be large and the number of gaskets 91 produced out of the base member 90 is small; thus, it is difficult to reduce production cost. In addition, the base member 90 is mostly discarded; thus, improvement is required from the viewpoint of environmental protection.

Fig. 5 is an explanatory diagram showing a punching process according to the first embodiment. As shown in Fig. 5, in the first embodiment, a plurality of components 50, which have the same shape and are adjacent to one another, are produced out of the base member 90. Thus, compared to the comparative example, required size of the base member 90 is reduced, and portions of the base member 90 to be discarded are reduced. According to the above-described configuration, it is possible to increase the number of gaskets 30 produced out of the base member 90 compared to the comparative example, thereby reducing production cost; furthermore, it is possible to effectively use resources, thereby contributing to environmental protection.

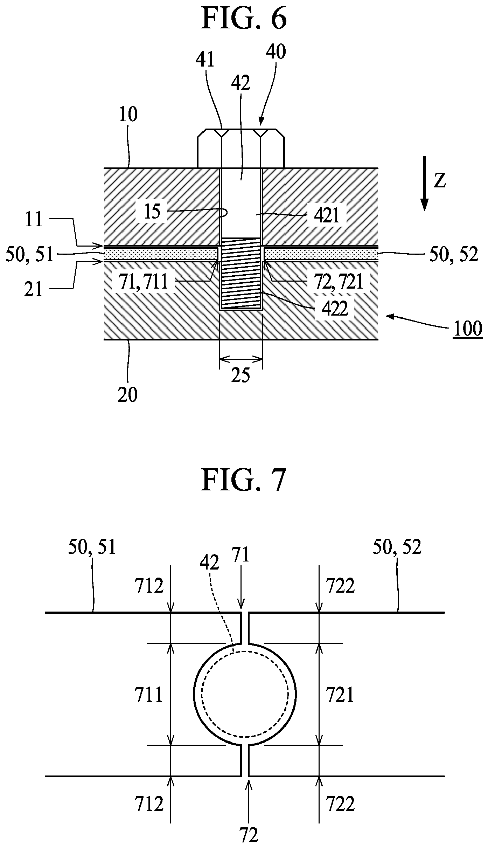

Fig. 6 is a cross section of a vicinity of a freely selected fastener 40 in the sealing structure 100 according the first embodiment. As shown in Fig. 6, the fastener 40 is a bolt constituted of a head 41 and a shank 42. The head 41 is connected to a proximal end of the shank 42. The shank 42 includes an axis 421 and a thread 422. The thread 422 is a cylindrical portion of the shank 42 that includes a distal end opposite to the head 41. An outer periphery of the thread 422 is provided with a thread groove. The axis 421 is a cylindrical portion of the shank 42 that includes the proximal end adjacent to the head 41. It should be noted that the axis 421 may be omitted.

As shown in Fig. 6, the first member 10 is provided with a mounting hole 15 corresponding to each of the plurality of fasteners 40. The mounting hole 15 is a circular through hole formed to have a diameter slightly larger than that of the shank 42 of the fastener 40. On the other hand, the second member 20 is provided with a mounting hole 25 corresponding to each of the plurality of fasteners 40. The mounting hole 25 is a circular bottomed hole having an inner peripheral surface provided with a thread groove that meshes with the thread groove of the fastener 40. The fastener 40 is inserted in the mounting hole 15 and the mounting hole 25. Specifically, the thread 422 is fixed to the mounting hole 25 in a state in which the shank 42 of the fastener 40 penetrates the mounting hole 15.

In Fig. 6, freely selected two adjacent components 50 among the plurality of components 50 of the gasket 30 are shown as a first component 51 and a second component 52. In other words, the configuration shown in Fig. 6 is used for each set of two adjacent components 50. In addition, Fig. 7 comprises plan views of the first component 51 and the second component 52.

As shown in Fig. 6 and Fig. 7, the first component 51 includes a first end surface 71. Similarly, the second component 52 includes a second end surface 72, and the first end surface 71 and the second end surface 72 face each other. In plan view, the fastener 40 is disposed between the first end surface 71 and the second end surface 72.

The first end surface 71 includes a first arcuate surface 711 and first flat surfaces 712. The first arcuate surface 711 is an arcuate inner peripheral surface along an outer peripheral surface of the shank 42 of the fastener 40. Specifically, the first arcuate surface 711 is a cylindrical surface, which has an inner diameter slightly larger than an outer shape of the shank 42 and has a central axis along the Z-axis. The first flat surfaces 712 are flat surfaces adjacent to the first arcuate surface 711. Specifically, the first flat surfaces 712 are disposed on both sides of the first arcuate surface 711.

Similar to the first end surface 71, the second end surface 72 includes a second arcuate surface 721 and second flat surfaces 722. The second arcuate surface 721 is an arcuate inner peripheral surface along the outer peripheral surface of the shank 42 of the fastener 40. Specifically, the second arcuate surface 721 is a cylindrical surface, which has an inner diameter slightly larger than the outer shape of the shank 42 and has a central axis along the Z-axis. The second flat surfaces 722 are flat surfaces adjacent to the second arcuate surface 721. Specifically, the second flat surfaces 722 are disposed on both sides of the second arcuate surface 721.

As shown in Fig. 7, the first flat surfaces 712 and the second flat surfaces 722 face each other across a minute space. It should be noted that the first flat surfaces 712 and the second flat surfaces 722 may be in contact with each other without any gap.

In addition, as shown in Fig. 7, the first arcuate surface 711 and the second arcuate surface 721 form a cylindrical space. The shank 42 of the fastener 40 is disposed in the cylindrical space surrounded by the first arcuate surface 711 and the second arcuate surface 721. In other words, the fastener 40 is disposed between the first arcuate surface 711 and the second arcuate surface 721.

As described above, the fastener 40 is provided between the two adjacent components 50 (51,52). In other words, the gasket for sealing the internal space of the sealing structure 100 is constituted of a combination of the plurality of components 50 and the plurality of fasteners 40. Specifically, the fasteners 40 for fastening the first member 10 and the second member 20 together are disposed between the first end surface 71 and the second end surface 72; thus, a sealing function is realized. Thus, it is possible to construct the sealing structure 100 by a simple operation of fastening the first member 10 and the second member 20 together by the plurality of fasteners 40 in a state in which the plurality of components 50 is disposed between the first member 10 and the second member 20. For example, in a step of constructing the sealing structure 100, an operation of applying an adhesive or a liquid gasket is unnecessary, for example.

In addition, for example, in a configuration in which the plurality of components 50 are joined together by welding, irregularities form at junctions. In addition, in a configuration in which the plurality of components 50 are bonded together by an adhesive, it is necessary to adhere the respective components 50 that overlap; thus, irregularities form at junctions. As described above, it is difficult to sufficiently secure sealing performance in a state in which irregularities form at junctions. In the first embodiment, the first end surface 71 of the first component 51 and the second end surface 72 of the second component 52 are disposed so as to face each other; thus, it is possible to substantially prevent irregularities from forming. Thus, it is possible to substantially prevent a decrease in sealing performance caused by irregularities at junctions.

In the first embodiment, in particular, the fastener 40 is provided in the cylindrical space between the first arcuate surface 711 and the second arcuate surface 721. Thus, for example, compared to a configuration in which the first end surface 71 and the second end surface 72 are simple flat surfaces, it is possible to reduce a gap between an outer peripheral surface of the fastener 40 and each of the first end surface 71 and the second end surface 72; as a result, it is possible to improve sealing performance.

### B: Second Embodiment

A second embodiment according to this disclosure will be described. It should be noted that in the descriptions of the following embodiments, elements having the same functions as in the first embodiment are denoted by the same reference numerals as used for like elements in the description of the first embodiment, and detailed description thereof is omitted, as appropriate.

The sealing structure 100 according to the second embodiment includes the first member 10, the second member 20, the gasket 30, and the plurality of fasteners 40 as in the first embodiment shown in Fig. 1. The gasket 30 includes the plurality of components 50.

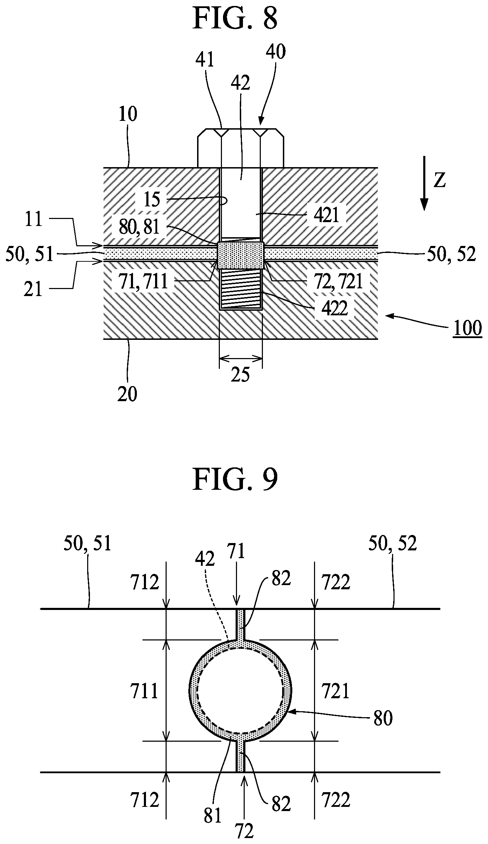

Fig. 8 is a cross section of a vicinity of a freely selected fastener 40 in the sealing structure 100 according to the second embodiment. In addition, Fig. 9 comprises plan views of the first component 51 and the second component 52 adjacent to each other among the plurality of components 50 constituting the gasket 30 according to the second embodiment.

As shown in Fig. 8 and Fig. 9, the sealing structure 100 according to the second embodiment includes a sealing material 80 in addition to elements similar to those of the first embodiment. The sealing material 80 is provided for each of the plurality of fasteners 40. The respective sealing material 80 is an elastic body provided between the first end surface 71 of the first component 51 and the second end surface 72 of the second component 52. The sealing material 80 is made of an elastic material such as nitrile rubber, styrene-butadiene rubber, fluorine rubber, acrylic rubber, or silicone rubber, for example.

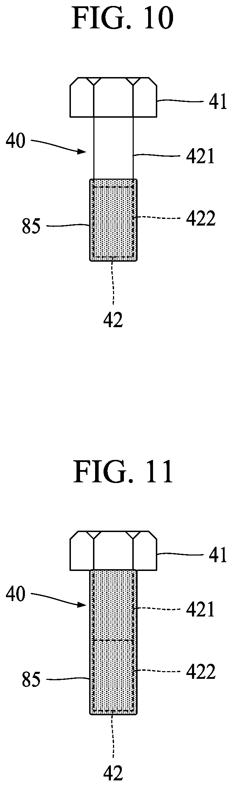

Fig. 10 is a side view of a fastener 40 according to the second embodiment. As shown in Fig. 10, the initial fastener 40, which is not provided in the sealing structure 100, is provided with a sealing material 85. Specifically, the thread 422 of the shank 42 of the fastener 40 is covered with the sealing material 85. The sealing material 85 is a coating film, which is to be the sealing material 80 in a state in which the fastener 40 is provided in the sealing structure 100. The sealing material 85 is formed to have an appropriate film thickness within a range of 0.1 mm or more and 5.0 mm or less, for example. It should be noted that the sealing material 85 may be made of a liquid material or a gelatinous material.

By the fastener 40 described above being inserted into the mounting hole 15 and the mounting hole 25, the sealing material 85 is provided between the first end surface 71 and the second end surface 72. By the sealing material 85 being provided, the sealing material 80 is formed.

As shown in Fig. 8 and Fig. 9, the sealing material 80 includes a first seal 81 and second seals 82. The first seal 81 is a section provided in a gap between the fastener 40 and each of the plurality of components 50. Specifically, the first seal 81 is provided between the first arcuate surface 711 and the outer peripheral surface of the shank 42 of the fastener 40, and between the second arcuate surface 721 and the outer peripheral surface of the shank 42 of the fastener 40. In other words, the first arcuate surface 711, the second arcuate surface 721, and the outer peripheral surface of the shank 42 are each in contact with the first seal 81. As will be understood from the above description, the first seal 81 is a cylindrical portion.

As shown in Fig. 9, the second seals 82 are portions of the sealing material 80 that are interposed between the first flat surfaces 712 of the first end surface 71 and the second flat surfaces 722 of the second end surface 72. In other words, the first flat surfaces 712 and the second flat surfaces 722 are each in contact with the second seals 82. As will be understood from the above description, the second seals 82 are flat plate-shaped portions.

As will be understood from the above description, in the second embodiment, the gasket for sealing the internal space of the sealing structure 100 is constituted of a combination of the plurality of components 50, the plurality of fasteners 40, and the plurality of sealing materials 80.

The second embodiment provides the same effects as those provided by the first embodiment. Furthermore, in the second embodiment, the sealing material 80, in addition to the fastener 40, is disposed between the first end surface 71 and the second end surface 72. Thus, compared to the first embodiment in which only the fastener 40 is disposed between the first end surface 71 and the second end surface 72, it is possible to improve sealing performance of the sealing structure 100.

In the second embodiment, in particular, the first seal 81 is disposed between the outer peripheral surface of the fastener 40 and each of the first arcuate surface 711 and the second arcuate surface 721; thus, it is possible to sufficiently improve sealing performance of the sealing structure 100 compared to a configuration in which a gap is formed between the outer peripheral surface of the fastener 40 and each of the first arcuate surface 711 and the second arcuate surface 721.

Furthermore, in the second embodiment, the second seals 82 are disposed between the outer peripheral surface of the fastener 40 and each of the first flat surfaces 712 and the second flat surfaces 722; thus, it is possible to sufficiently improve sealing performance of the sealing structure 100 compared to a configuration in which a gap is formed between the first flat surfaces 712 and the second flat surfaces 722.

### C: Modifications

Specific modifications that may be applied to each embodiment described above are described below. Two or more modifications freely selected from the following modifications may be combined as long as no conflict arises from such combination.

(1) In the second embodiment, a configuration is described in which the thread 422 of the fastener 40 is covered with the sealing material 85; however, as shown in Fig. 11, the entire shank 42 of the fastener 40 may be covered with the sealing material 85.
(2) In the second embodiment, a configuration is described in which the sealing material 80 includes the first seal 81 and the second seals 82; however, either the first seal 81 or the second seals 82 may be omitted. For example, in a configuration in which the first arcuate surface 711 and the second arcuate surface 721 are in close contact with the outer peripheral surface of the fastener 40, the first seal 81 may be omitted. Alternatively, for example, in a configuration in which the first flat surfaces 712 and the second flat surfaces 722 are in close contact with each other, the second seals 82 may be omitted.
(3) A structure of the laminate included in each of the plurality of components 50 is not limited to the example of each of the above-described embodiments. For example, in each of the plurality of components 50, between the base 500 and either the first elastic layer 501 or the second elastic layer 502, a base film for improving adhesion therebetween may be provided. In addition, the base 500 may be constituted of a laminate with a plurality of layers having different materials. Similarly, the first elastic layer 501 and the second elastic layer 502 may be each constituted of a laminate with a plurality of layers having different materials.
(4) A planar shape of the gasket 30 is not limited to the example of each of the above-described embodiments. For example, each of the above-described embodiments is similarly applied to an annular or polygonal gasket 30. In each of the above-described embodiments, the gasket 30 that is continuous over an entire circumference thereof is described; however, each of the above-described embodiments is similarly applied to a gasket 30 having a planar shape that is cut at a specific portion (for example, a joint portion). In other words, the planar shape of the gasket 30 may be a shape that is partly noncontinuous. In addition, the number of components 50 constituting the gasket 30 is not limited to the example of each of the above-described embodiments. For example, the gasket 30 may be constituted of two components 50.
(5) The notation "n-th" (n is a natural number) is used in this disclosure for convenience and is merely a formality label to distinguish different elements from each other, and this notation has no substantive inherent meaning. Thus, notation of a position of an element or an order of production of an element as "n-th" is not limited to a narrow literal interpretation, and position and order of an element and the like are to be broadly understood.

### D: Supplemental Notes

The following configurations are derivable from the foregoing embodiments.

A sealing structure according to an aspect (first aspect) of this disclosure includes a first member provided with a mounting hole, a second member facing the first member, a fastener inserted in the mounting hole and fastening the first member and the second member together, and a gasket including a plurality of components disposed between the first member and the second member, wherein the plurality of components includes a first component including a first end surface and a second component including a second end surface facing the first end surface, and wherein the fastener is disposed between the first end surface and the second end surface. According to this aspect, the fastener for fastening the first member and the second member together is disposed between the first end surface and the second end surface; thus, a sealing function is realized. Thus, it is possible to construct the sealing structure by a simple operation of fastening the first member and the second member together by the fastener in a state in which the plurality of components is disposed between the first member and the second member. For example, in a step of constructing the sealing structure, an operation of applying an adhesive or a liquid gasket is unnecessary, for example.

In a specific example (second aspect) of the first aspect, the first end surface includes a first arcuate surface along an outer peripheral surface of the fastener, the second end surface includes a second arcuate surface along the outer peripheral surface of the fastener, and the fastener is disposed between the first arcuate surface and the second arcuate surface. According to this aspect, since the fastener is provided in a cylindrical space between the first arcuate surface and the second arcuate surface, it is possible to reduce a gap between an outer peripheral surface of the fastener and each of the first end surface and the second end surface; as a result, it is possible to improve sealing performance.

A specific example (third aspect) of the second aspect further includes a first seal provided between the first arcuate surface and the outer peripheral surface of the fastener and between the second arcuate surface and the outer peripheral surface of the fastener. In this aspect, the first seal is disposed between the outer peripheral surface of the fastener and each of the first arcuate surface and the second arcuate surface; thus, it is possible to sufficiently improve sealing performance compared to a configuration in which a gap is formed between the outer peripheral surface of the fastener and each of the first arcuate surface and the second arcuate surface.

In a specific example (fourth aspect) of the second aspect or the third aspect, the first end surface includes a first flat surface adjacent to the first arcuate surface, the second end surface includes a second flat surface adjacent the second arcuate surface, and the sealing structure further includes a second seal interposed between the first flat surface and the second flat surface. In this aspect, the second seal is disposed between the outer peripheral surface of the fastener and each of the first flat surfaces and the second flat surfaces; thus, it is possible to sufficiently improve sealing performance compared to a configuration in which a gap is formed between the first flat surfaces and the second flat surfaces.

A specific example (fifth aspect) of any one of the first aspect to the fourth aspect further includes a sealing material provided between the first end surface and the second end surface. In this aspect, since the sealing material, in addition to the fastener, is disposed between the first end surface and the second end surface, it is possible to improve sealing performance compared to a configuration in which only the fastener is disposed between the first end surface and the second end surface.

In a specific example (sixth aspect) of any one of the first aspect to the fifth aspect, each of the plurality of components includes a base constituted of metal material, a first elastic layer covering a surface of the base, and a second elastic layer covering a different surface of the base. According to this aspect, it is possible to secure sufficient sealing performance by the first elastic layer and the second elastic layer and to maintain rigidity of the component by the base.

A method for producing a sealing structure according to an aspect (seventh aspect) of this disclosure includes a step of disposing, between a first member provided with a mounting hole and a second member facing the first member, a plurality of components constituting a gasket, the step being a step of disposing the plurality of components such that a first end surface of a first component among the plurality of components and a second end surface of a second component among the plurality of components face each other, and a step of fastening the first member and the second member together by inserting a fastener into the mounting hole such that the fastener is disposed between the first end surface and the second end surface. According to this aspect, it is possible to construct the sealing structure by a simple operation of fastening the first member and the second member together by the fastener in a state in which the plurality of components is disposed between the first member and the second member.

A specific example (eighth aspect) of the seventh aspect further includes a step of producing the plurality of components by punching a plate-shaped member. According to this aspect, it is possible to produce many components together by punching the base member. In addition, since the gasket that is divided into the plurality of components is produced, it is possible to reduce portions of the base member that are to be discarded compared to a configuration in which a gasket, which has a similar outer shape, is constituted of a single member.

### Description of Reference Signs

100... sealing structure, 10... first member, 11... joining surface, 12... opening, 15... mounting hole, 20... second member, 21... joining surface, 22... opening, 25... mounting hole, 30... gasket, 40... fastener, 41... head, 42... shank, 421... axis, 422... thread, 50, 51, 52... component, 500... base, 501... first elastic layer, 502... second elastic layer, 71... first end surface, 711... first arcuate surface, 712... first flat surface, 72... second end surface, 721... second arcuate surface, 722... second flat surface, 80... sealing material, 81... first seal, 82... second seal, 90... base member.

## Claims

1. A sealing structure comprising:
a first member provided with a mounting hole;
a second member facing the first member;
a fastener inserted in the mounting hole and fastening the first member and the second member together; and
a gasket including a plurality of components disposed between the first member and the second member,
wherein the plurality of components includes:
a first component including a first end surface; and
a second component including a second end surface facing the first end surface, and
wherein the fastener is disposed between the first end surface and the second end surface.

2. The sealing structure according to claim 1,
wherein the first end surface includes a first arcuate surface along an outer peripheral surface of the fastener,
wherein the second end surface includes a second arcuate surface along the outer peripheral surface of the fastener, and
wherein the fastener is disposed between the first arcuate surface and the second arcuate surface.

3. The sealing structure according to claim 2, further comprising:
a first seal provided between the first arcuate surface and the outer peripheral surface of the fastener and between the second arcuate surface and the outer peripheral surface of the fastener.

4. The sealing structure according to claim 2 or claim 3,
wherein the first end surface includes a first flat surface adjacent to the first arcuate surface, and
wherein the second end surface includes a second flat surface adjacent the second arcuate surface,
the sealing structure further comprising:
a second seal interposed between the first flat surface and the second flat surface.

5. The sealing structure according to claim 1, further comprising:
a sealing material provided between the first end surface and the second end surface.

6. The sealing structure according to claim 1, wherein each of the plurality of components includes:
a base constituted of metal material;
a first elastic layer covering a surface of the base; and
a second elastic layer covering a different surface of the base.

7. A method for producing a sealing structure, the method comprising:
a step of disposing, between a first member provided with a mounting hole and a second member facing the first member, a plurality of components constituting a gasket, the step being a step of disposing the plurality of components such that a first end surface of a first component among the plurality of components and a second end surface of a second component among the plurality of components face each other; and
a step of fastening the first member and the second member together by inserting a fastener into the mounting hole such that the fastener is disposed between the first end surface and the second end surface.

8. The method for producing the sealing structure according to claim 7, further comprising:
a step of producing the plurality of components by punching a plate-shaped member.
